# EUROPEAN PATENT SPECIFICATION

(11) **EP 3 073 217 B1**
(45) Date of publication and mention of the grant of the patent: **27.02.2019**
(21) Application number: 16161444.1
(22) Date of filing: 21.03.2016
(51) Int. Cl.: F28D 7/00, F02C 7/14, F01D 25/12, F02C 7/18, F28D 21/00, F28D 1/02, F28D 1/047

(54) **HEAT EXCHANGER FOR A GAS TURBINE ENGINE**
WÄRMETAUSCHER FÜR EINEN GASTURBINENMOTOR
ÉCHANGEUR DE CHALEUR POUR MOTEUR À TURBINE À GAZ

(30) Priority: 24.03.2015 US 201514666389
(43) Date of publication of application: 28.09.2016
(73) Proprietor: General Electric Company, Schenectady, NY 12345 (US)
(72) Inventor: RAMBO, Jeffrey Douglas, Weat Chester, OH Ohio 45069 (US); GERSTLER, William Dwight, Niskayuna, NY New York 12309 (US); KOSTKA, James Michael, Cincinnati, OH Ohio 45215 (US); MOORES, John William, Cincinnati, OH Ohio 45241 (US)
(74) Representative: Foster, Christopher Michael

(56) References cited:
- EP-A1- 2 511 508
- EP-A2- 1 837 616
- GB-A- 400 557
- US-A1- 2010 293 946

## Description

### BACKGROUND

This invention relates generally to gas turbine engines and methods for oil cooling in such engines.

Gas turbine engines are commonly provided with a circulating oil system for lubricating and cooling various engine components such as bearings, gearboxes, electrical generators, and the like. In operation the oil absorbs a substantial amount of heat that must be rejected to the external environment in order to maintain the oil at acceptable temperatures. As engine designs evolve the amount of heat to be rejected is increasing.

Known oil cooling systems for gas turbine engines typically include one or more air-to-oil heat exchangers, referred to as "air cooled oil coolers" or "ACOCs", and may also include air-to-air heat exchangers. These heat exchangers can be heavy and have high drag, and can require special inlet and outlet ducts and large, heavy brackets.

The high weight is attributable partially to the need with existing designs to use heavy, high-strength alloys and to designs in which the structural and thermal functions are addressed separately. Furthermore, these heat exchangers are used in a challenging environment with high temperatures and pressures that can cause low cycle fatigue ("LCF") problems and high vibration levels that can cause high cycle fatigue ("HCF") problems.

GB 400 557 A describes a heat exchanger apparatus for internal combustion engines, which includes a plurality of heat exchanger pipes coupled in fluid communication with central inlet and outlet chambers. The plurality of heat exchanger pipes is circumferentially spaced relatively to each other uniformly around the central chamber providing interstices between the tubes for axial air flow therethrough. In one embodiment, the plurality of heat exchanger pipes includes circumferentially bent cooling tubes, which in front view are approximately heart-shaped and include oppositely curved end portions and involute curved intermediate portions situated in planes normal to a central axis of the apparatus. The tube structure may be stiffened and held against vibration by spot welding the outer portion of adjacent tubes together. In another embodiment, the cooling tubes have two identical, axially aligned legs which are each continuously bent into a C-like shape and connected at their free ends by a return bend. In order to support the cooling tubes against vibration, the outer portions of the tubes may be connected by means of a circular band secured to the tubes.

EP 1 837 616 A2 describes a gas turbine heat exchanger comprising a lattice formed from a plurality of tubes which are divided into at least two groups, wherein the tubes in one group are arranged at a crossing angle to the tubes in one other tube group. The tube groups are stacked in a stack layer and junctions are provided between a tube in one tube group and a respective tube in one other tube group to provide fluid interconnection therebetween. Adjacent stack layers may contact each other to restrain vibration of the tubes.

Accordingly, there is a need for a gas turbine engine heat exchanger having low weight, compact size and good strength and fatigue life.

### BRIEF DESCRIPTION

This need is addressed by the present invention, which provides a heat exchanger having a plurality of joined, mutually-supporting heat exchanger pipes.
The invention is defined by the claims, to which reference should now be made.
According to one aspect of the invention, a heat exchanger apparatus for a gas turbine engine includes a plurality of heat exchanger pipes, each pipe having two identical, spaced apart legs which are parallel to each other, each leg having a first end and a second end and the second ends being connected by a bridge which extends transversely between the two legs, each leg including a first upright segment with a first bend at the first end, a second upright segment with a second, opposite bend at the second end, and a straight segment therebetween; wherein the heat exchanger pipes are disposed in a repeating pattern such that the bridge of each heat exchanger pipe is joined to and contacting at least one other heat exchanger pipe.

According to another aspect of the invention, each heat exchanger pipe is joined to other heat exchanger pipes at two or more locations.

According to another aspect of the invention, each heat exchanger pipe is joined to other heat exchanger pipes at three locations.
According to another aspect of the invention, the joints between neighboring heat exchanger pipes are defined by mutually shared wall portions of the heat exchanger pipes.
According to another aspect of the invention, the apparatus further includes a fluid manifold, wherein the first and second ends of each heat exchanger pipe are connected in fluid communication with the fluid manifold.
According to another aspect of the invention, the fluid manifold includes at least one inlet channel and at least one outlet channel, and the first end of each heat exchanger pipe is connected to an inlet channel and the second end of each heat exchanger pipe is connected to an outlet channel.

According to another aspect of the invention, the fluid manifold includes two inlet channels and one outlet channel, and wherein a first heat exchanger pipe is connected to the first inlet channel and the outlet channel and a second heat exchanger pipe is connected to the outlet channel and the second inlet channel.

According to another aspect of the invention, wherein in relation to a reference axis parallel to the inlet channels, the two heat exchanger pipes are in approximately the same axial position but are laterally offset from one another, wherein the bridge of the first heat exchanger pipe is contacting a first leg of the second heat exchanger pipe.

According to another aspect of the invention, each straight segment is an axial segment which extends along a reference axis parallel to an inlet channel with which the first end of the leg is coupled in fluid communication. According to another aspect of the invention, the bridge of each heat exchanger pipe is joined to the leg of a neighboring heat exchanger pipe.
According to another aspect of the invention, the heat exchanger pipes are arranged in two spaced-apart rows, wherein the heat exchanger pipes of the rows are disposed mirror-images acute angles to a reference axis.
According to another aspect of the invention, the heat exchanger pipes of the first row are interlocked with the heat exchanger pipes of the second row.
According to another aspect of the invention, an exterior surface of at least one of the heat exchanger pipes includes an area-increasing structure.
According to another aspect of the invention, the area-increasing structure is made from a material different from the at least one heat exchanger pipe.
According to another aspect of the invention, channels defined between the heat exchanger pipes having an approximately constant flow area along a selected direction of flow.

### BRIEF DESCRIPTION OF THE DRAWINGS

The invention may be best understood by reference to the following description taken in conjunction with the accompanying drawing Figures in which:
FIG. 1 is a schematic cross-sectional view of a gas turbine engine incorporating a heat exchanger system constructed according to an aspect of the present invention;
FIG. 2 is perspective view of a single heat exchanger pipe constructed according to an aspect of the present invention;
FIG. 3 is a perspective view of two of the heat exchanger pipes shown in FIG. 2;
FIG. 4 is a perspective view of three of the heat exchanger pipes shown in FIG. 3;
FIG. 5 is a perspective view of an array of the heat exchanger pipes shown in FIG. 2;
FIG. 6 is a perspective view of two of the heat exchanger pipes shown in FIG. 2, in an alternative arrangement;
FIG. 7 is a perspective view of four of the heat exchanger pipes shown in FIG. 6;
FIG. 8 is a perspective view of an array of the heat exchanger pipes shown in FIG. 6;
FIG. 9 is a perspective view of two alternative heat exchanger pipes constructed according to an illustrative example of the present invention;
FIG. 10 is a perspective view of four of the heat exchanger pipes shown in FIG. 9;
FIG. 11 is a perspective view of six of the heat exchanger pipes shown in FIG. 9;
FIG. 12 is a perspective view of an array of the heat exchanger pipes shown in FIG. 9; and
FIG. 13 is a schematic cross-sectional view of a heat transfer pipe incorporating area-increasing structures.

### DETAILED DESCRIPTION

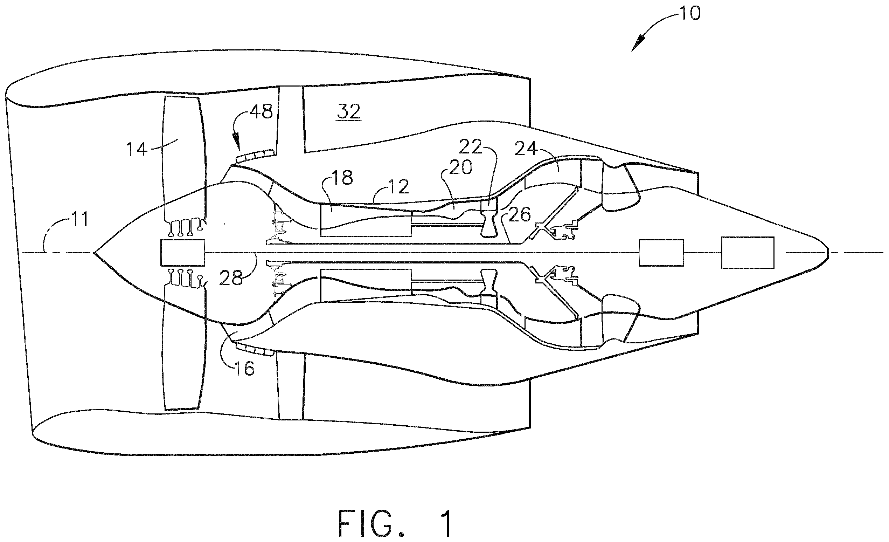

Referring to the drawings wherein identical reference numerals denote the same elements throughout the various views, FIG. 1 depicts a gas turbine engine 10 incorporating a heat exchanger apparatus constructed according to an aspect of the present invention, while the illustrated example is a high-bypass turbofan engine, the principles of the present invention are also applicable to other types of engines, such as low-bypass, turbojet, etc. The engine 10 has a longitudinal center line or axis 11 and an outer stationary annular casing 12 disposed concentrically about and coaxially along the axis 11. The engine 10 has a fan 14, booster 16, compressor 18, combustor 20, high pressure turbine 22, and low pressure turbine 24 arranged in serial flow relationship. In operation, pressurized air from the compressor 18 is mixed with fuel in the combustor 20 and ignited, thereby generating combustion gases. Some work is extracted from these gases by the high pressure turbine 22 which drives the compressor 18 via an outer shaft 26. The combustion gases then flow into a low pressure turbine 24, which drives the fan 14 and booster 16 via an inner shaft 28. The engine 10 includes a bypass duct 32 into which the fan 14 discharges.

The engine 10 includes a known type of system for circulating pressurized oil to various parts of the engine (for example, bearings) for lubrication and cooling. In operation, the oil absorbs a significant heat load which must then be rejected to the external environment. The present invention provides a heat exchanger apparatus for cooling that oil or other fluid. Generally stated, the heat exchanger includes a plurality of slender heat exchanger pipes which are exposed to a cooling air flow, and through which the oil is circulated. The pipes are connected to each other to form a mutually self-supporting structure. Numerous physical configurations of the heat exchanger pipes are possible. Several examples will be discussed in detail below.

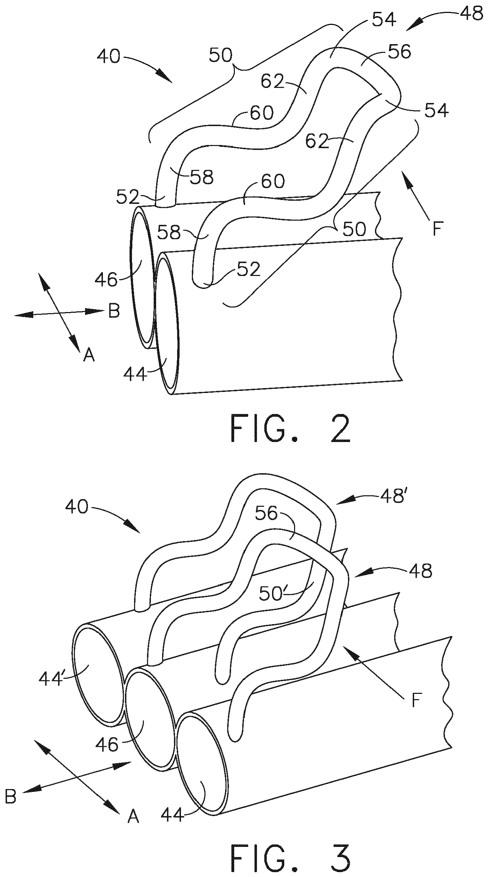

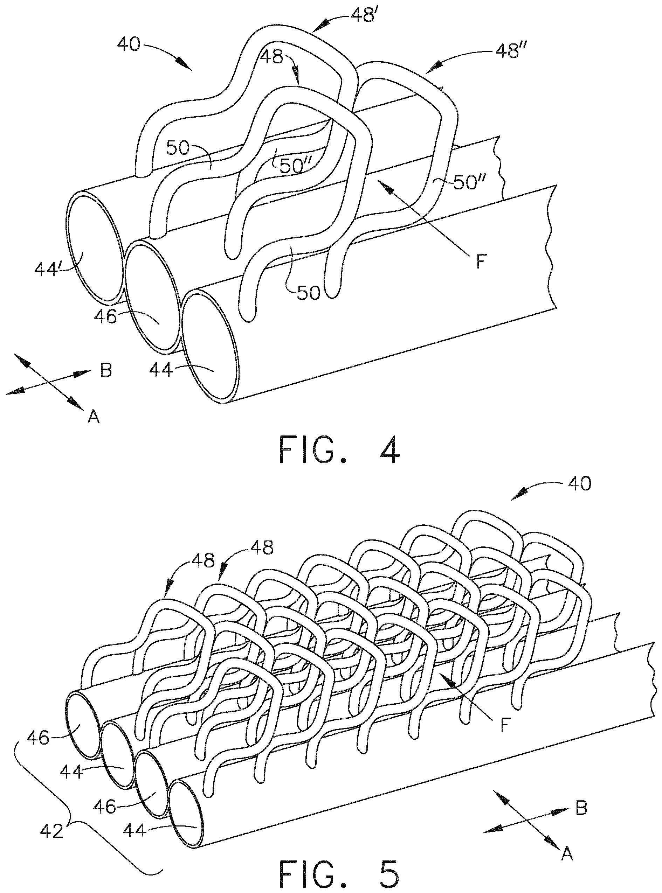

FIGS. 2-5 illustrate an exemplary heat exchanger 40. More specifically, FIGS. 2-4 illustrate portions of the heat exchanger 40 in various stages of assembly, while FIG. 5 illustrates the complete heat exchanger 40.

The heat exchanger 40 includes a fluid manifold 42 which is configured to receive a fluid (e.g. lubrication oil or another liquid, or a gas) to be cooled from the engine 10, circulate it through a plurality of heat exchanger pipes (described below), and return the cooled fluid to be stored or used by the engine 10. In the illustrated example, the fluid manifold 42 is shown as including one or more inlet channels 44 and one or more outlet channels 46 configured as side-by-side tubes.

The heat exchanger 40 includes a plurality of heat exchanger pipes 48 which in operation are positioned to be exposed to a flow of cooling fluid (e.g. air), depicted by arrow "F". For example, the heat exchanger 40 could be positioned with the heat exchanger pipes 48 exposed within the bypass duct 32 (see FIG. 1). In general, in the embodiments shown in FIGS. 2-8, the bulk direction of the cooling fluid flow F is parallel to a first axis or direction "A" of the fluid manifold 42, and perpendicular to a second axis or direction "B" of the fluid manifold 42, wherein axes A and B are mutually perpendicular to each other.

Referring specifically to FIG. 2, each heat exchanger pipe 40 is a relatively long slender tube with at least one bend in it. As a general principle it may be stated that for each bend added to a pipe, heat transfer capability is improved, while vibrational degree of freedom ("DOF") is also increased. In the illustrated example, the heat exchanger pipe 40 is a single continuous member, but for convenience may be described as having several segments. In particular, each heat exchanger pipe has two identical, spaced apart "legs" 50 which are generally parallel to each other. Each leg 50 has a first end 52 and a second end 54, and the second ends 54 are connected by a bridge 56 which extends transversely between the two legs 50. Beginning at the first end 52, each leg 50 includes a first upright segment 58, an axial segment 60, and a second upright segment 62. The entire structure may be described as having a shape similar to a "chair frame". The first end 52 of one leg 50 (also representing one terminal end of the entire heat exchanger pipe 48) is coupled in fluid communication with the inlet channel 44, and the first end 52 of the second leg 50 (also representing a second terminal end of the entire heat exchanger pipe) is coupled in fluid communication with the outlet channel 46. Optionally, multiple heat exchanger pipes 48 could be interconnected with each other, for example using U-bends (not shown) so as to make multiple passes before terminating at the fluid manifold 42. Similarly, multiple heat exchanger pipes 48 could be arranged to provide pipe-to-pipe flow in a direction along reference axis B, in which case some or all of the fluid manifold 42 could be eliminated.

A single heat exchanger pipe 48 is relatively flexible and could be subject to damage from vibration loads resulting from engine operation or flow-induced vibrations caused by the aerodynamic shedding of the external air flow, commonly referred to as "fretting". To counter this, multiple heat exchanger pipes 48 may be assembled contacting each other at multiple locations so that they can mutually support each other, providing additional stiffness which raises the natural frequencies above the forcing frequency.

For example, in FIG. 3 the fluid manifold 42 is shown including two inlet channels 44, 44' respectively, and one outlet channel 46. One heat exchanger pipe 48 is connected to the first inlet channel 44 and the outlet channel 46, and the second heat exchanger pipe 48' is connected to the outlet channel 46 and the second inlet channel 44'. Referring to a reference axis B parallel to the inlet channels 44, 44', the two heat exchanger pipes 48, 48' are in approximately the same axial position but are laterally offset from one another. The bridge 56 of the first heat exchanger pipe 48 is shown contacting to a first leg 50' of the second heat exchanger pipe 48'. The two heat exchanger pipes 48, 48' are joined to each other at the contact point.

As used herein in referring to the heat exchanger pipes 48, the term "joined" implies a solid, rigid structural connection of a permanent nature between the two joined elements. For example, the heat exchanger pipes 48 may be made separately and then joined using a known bonding process such as welding or brazing or diffusion bonding. Alternatively, the heat exchanger pipes 48 could be made as part of an integral, unitary, or monolithic whole, where the walls of the pipes are shared at the contact points.

FIG. 4 shows a further stage of assembly where a third heat exchanger pipe 48" has been added, connected to the first inlet channel 44 and the outlet channel 46, and laterally in-line with the first heat exchanger pipe 48 and axially offset therefrom. Each leg 50 of the first heat exchanger pipe 48 contacts the corresponding leg 50" of the third heat exchanger pipe 48". In this arrangement the first heat exchanger pipe 48 is contacted by and joined to other heat exchanger pipes 48', 48" at three locations.

Finally, FIG. 5 depicts the heat exchanger 40 where the arrangement of heat exchanger pipes 48 shown in FIG. 4 is repeated in both axial and lateral directions, and each heat exchanger pipe 48 is contacted by and joined to other heat exchanger pipes at three locations. This arrangement provides significant additional stiffness and strength to each of the heat exchanger pipe 48. Stated another way, the heat exchanger pipes 48 are mutually self-supporting. This gives the heat exchanger 40 good strength and stiffness so that its natural frequencies can be made appropriately high, while still being light weight. This configuration is advantageous as compared to the prior art use of tie plates or struts to stiffen heat exchanger tubes. The heat exchanger pipes 48 may also be described as being "interlocked". It is noted that the individual heat exchanger pipes 48 need not be joined or interlocked with immediately neighboring heat exchanger pipes 48 in order to accomplish the mutual self-support effect. For example, a first heat exchanger pipe 48 could be configured to joint or interlock with another heat exchanger pipe 48 that is separated from the first heat exchanger pipe 48 by one or more intervening heat exchanger pipes 48. This is true for all of the embodiments described herein.

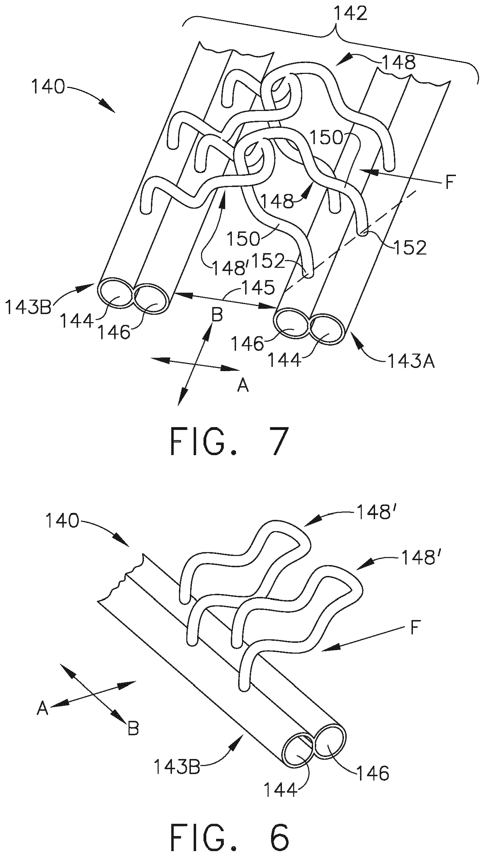

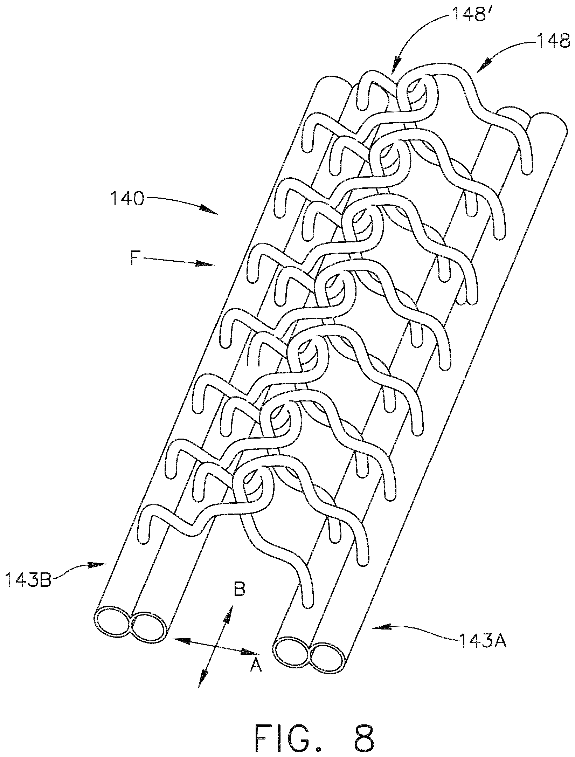

FIGS. 6-8 illustrate an alternative heat exchanger 140. More specifically, FIGS. 6 and 7 illustrate portions of the heat exchanger 140 in various stages of assembly, while FIG. 8 illustrates the complete heat exchanger 140.

The heat exchanger 140 uses the heat exchanger pipes 148 which may be identical to the heat exchanger pipes 48 as seen in FIGS. 2-5, but arranged in a different pattern. The heat exchanger 140 includes a fluid manifold 142 comprising two pairs of channels, 143A and 143B, Each channel pair 143A, 143B includes one inlet channel 144 and one outlet channel 146, configured as side-by-side tubes. The pairs 143A and 143B run parallel to each other and are laterally separated by a space 145.

The heat exchanger pipes 148 are oriented with a line running through their ends 152 set at an acute angle to a reference axis B. A first end 152 of one leg 150 (also representing one terminal end of the entire heat exchanger pipe) is coupled in fluid communication with the inlet channel 144 of the first pair 143A, and the first end 152 of the second leg 150 (also representing a second terminal end of the entire heat exchanger pipe 148) is coupled in fluid communication with the outlet channel 146 of the first pair 143A.

A row of heat exchanger pipes 148 oriented as described above are disposed along the first pair 143A of channels. Each heat exchanger pipe 148 contacts and is joined to its neighboring heat exchanger pipe 148 in the row at one location.
Another row of heat exchanger pipes 148' are disposed along the second pair 143B of channels, and arranged similarly, but are oriented as a mirror-image to the first row of heat exchanger pipes 148 (in other words, they are angled opposite relative to the axis B). Each heat exchanger pipe 148' contacts and is joined to its neighboring heat exchanger pipe 148' in the row at one location.
As seen in FIG. 8, the heat exchanger pipes 148, 148' of the two pairs 143A, 143B are interwoven with each other so that each heat exchanger pipe 148, 148' is contacted by and joined to other heat exchanger pipes 148, 148' at three locations.

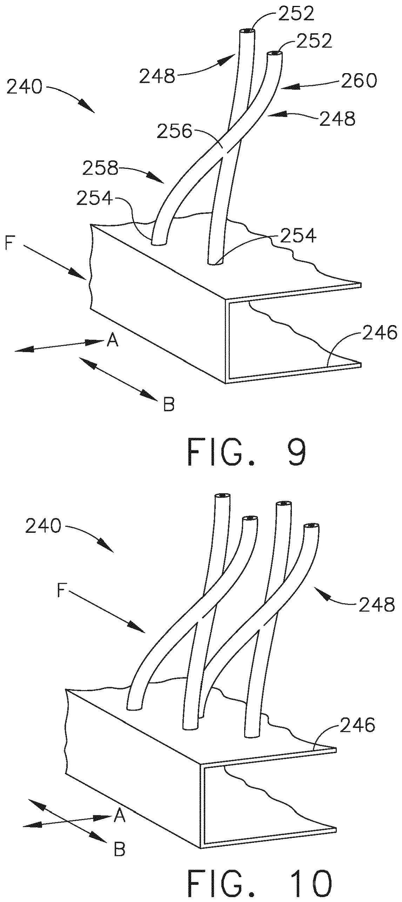

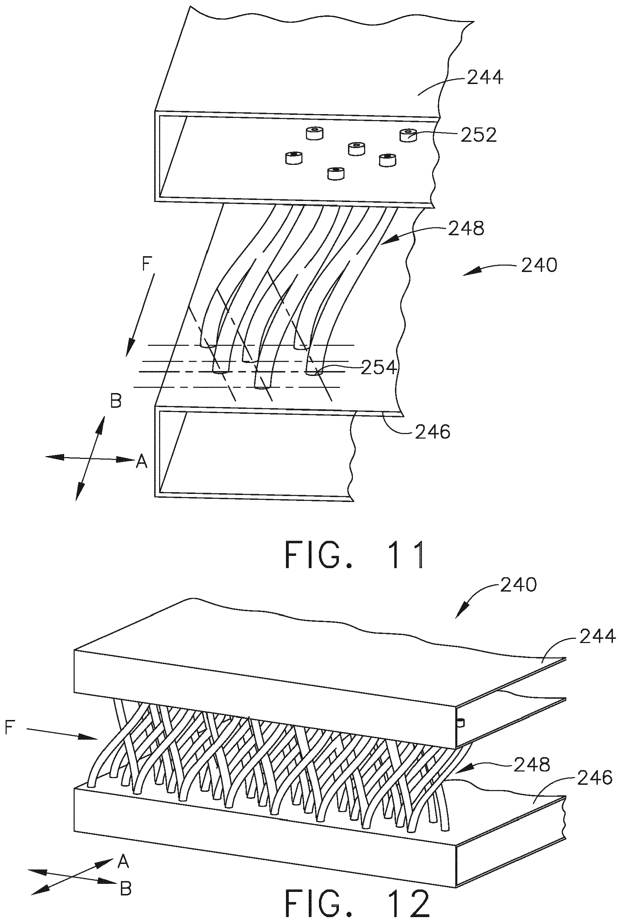

FIGS. 9-12 illustrate an illustrative example of heat exchanger 240. More specifically, FIGS. 9-11 illustrate portions of the heat exchanger 240 in various stages of assembly, while FIG. 12 illustrates the complete heat exchanger 240.
The heat exchanger 240 includes a fluid manifold. In the illustrated example, the fluid manifold includes an inlet channel 244 spaced-apart from an outlet channel 246.
The heat exchanger 240 includes a plurality of heat exchanger pipes 248 which in operation are positioned to be exposed to a flow of cooling fluid (e.g. air), depicted by arrow "F". In general, in the embodiment shown in FIGS. 9-12, the bulk direction of the cooling fluid flow F is parallel to a first axis or direction "A" of the fluid manifold, and perpendicular to a second axis or direction "B" of the fluid manifold, wherein axes A and B are mutually perpendicular to each other.
Referring specifically to FIG. 9, each heat exchanger pipe 248 is a relatively long slender tube with first and second ends 252, 254. Between the ends 252, 254, the heat exchanger pipe 248 has a straight central portion 256 with first and second end bends 258, 260 that are curved opposite each other. The complete heat exchanger pipe 248 can be described as having a shallow "S" shape. The first end 252 is coupled in fluid communication with the inlet channel 244, and the second end 254 is coupled in fluid communication with the outlet channel 246.

Each heat exchanger pipe 248 is paired with a neighboring heat exchanger pipe 248 contacting and mutually joined at one point and forming an "X" shape. As seen in FIGS. 10 and 11, these pairs can be repeated in axial and lateral directions. Finally, FIG. 12 depicts the complete heat exchanger 240.

The heat exchanger pipes described above may be made from a material with suitable thermal conductivity and strength at expected operating temperatures. Nonlimiting examples of suitable materials include aluminum alloys, high-strength steels, and nickel-based alloys (e.g. INCONEL).

In any of the configurations described above, the heat exchanger pipes may be configured such that the open spaces or flow channels for fluid flow between them are generally constant. Stated another way, the area of each of the open spaces is approximately the same for any given location along the direction of flow F. This avoids repeated expansions or contractions in flow area that would create a substantial pressure loss.

All or part of the heat exchangers described above, including the manifolds and/or the heat exchanger pipes, or portions thereof, may be part of a single unitary, one-piece, or monolithic component, and may be manufactured using a manufacturing process which involves layer-by-layer construction or additive fabrication (as opposed to material removal as with conventional machining processes). Such processes may be referred to as "rapid manufacturing processes" and/or "additive manufacturing processes," with the term "additive manufacturing process" being term herein to refer generally to such processes. Additive manufacturing processes include, but are not limited to: Direct Metal Laser Sintering (DMLS), Direct Metal Laser Melting (DMLM), Laser Net Shape Manufacturing (LNSM), electron beam sintering, Selective Laser Sintering (SLS), 3D printing, such as by inkjets and laserjets, Sterolithography (SLS), Electron Beam Melting (EBM), Laser Engineered Net Shaping (LENS), and Direct Metal Deposition (DMD).

Alternatively, portions of the heat exchangers described above could be made by processes such as rolling, extruding, casting, or machining from blanks, or by using an additive manufacturing process, and then bonded together, for example using known welding or brazing methods, or diffusion bonding.

A significant feature of all of the heat exchanger configurations described above is that the air flow spaces between the heat exchanger tubes are of approximately uniform size. A constant air flow area minimizes pressure drop by reducing irreversible flow losses associated with flow acceleration and deceleration. While the exemplary figures show this is achieved using a repeatable tubular pattern, this is not a limiting feature of the invention. The same constant air flow space can be achieved through a combination of changing the number of heat exchanger pipes and the shapes of the heat exchanger pipes along the air flow path. Such an arrangement results in a non-uniform distribution of heat exchanger pipes and pips sizes, while maintaining a uniform air flow area. Manufacturing techniques such as additive manufacturing allows realization of such designs.

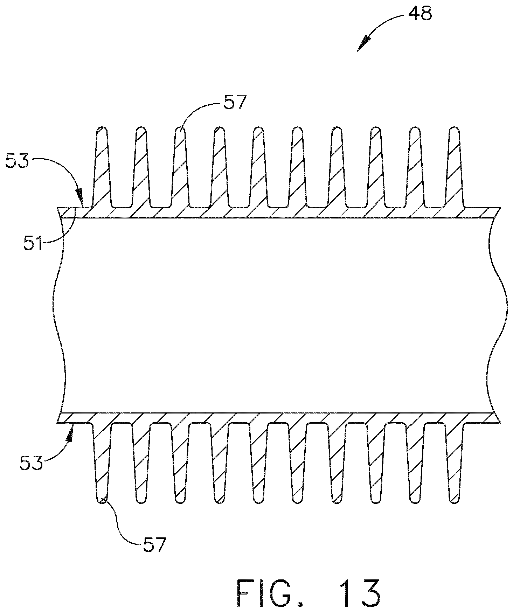

The exterior surfaces of any of the heat exchanger pipes described above may be provided with area-increasing structures to enhance the air-side heat transfer. Nonlimiting examples of area-increasing structures include fins, ribs, pin fins, grooves, and dimples. FIG. 13 shows a short section of a heat transfer pipe 48 having a pipe wall 51 with an exterior surface 53. An array of spaced-apart annular fins 57 extend outward from the exterior surface 53. The fins 57 or other area-increasing structure could be part of an integral, unitary, or monolithic construction with the pipe wall 51, for example being made by a conventional machining or additive machining process, or they could be manufactured separately and then attached to the pipe wall 51. The fins 57 or other area-increasing structure could be of the same material as the pipe wall 51 or a different material.

The invention described herein has several advantages over the prior art. The integrated structural-thermal design allows for improved LCF/HCF life, and improved heat exchanger packaging. For a given set of temperature and pressure conditions, it can allow the use of a material with higher thermal conductivity and lower strength than would otherwise be required. For example, depending on the specific application, it might allow a nickel-based alloy to perform where no alloy would otherwise be suitable, or allow the substitution of a steel alloy in place of a nickel alloy, or allow the substitution of an aluminum alloy in place a steel alloy.
The foregoing has described a heat exchanger apparatus. All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiments but defined by the appended claims.

## Claims

1. A heat exchanger apparatus (40, 140) for a gas turbine engine, comprising a plurality of heat exchanger pipes (48, 148), each pipe (48, 148) having two identical, spaced apart legs (50, 150) which are parallel to each other, each leg having a first end (52, 162) and a second end (54) and the second ends (54) being connected by a bridge (56) which extends transversely between the two legs (50, 150), each leg (50, 150) including a first upright segment (58) with a first bend at the first end (52, 152), a second upright segment (58) with a second, opposite bend at the second end (54), and a straight segment (60) therebetween; wherein the heat exchanger pipes (48, 148) are disposed in a repeating pattern such that the bridge (56) of each heat exchanger pipe (48, 148) is joined to and contacting at least one other heat exchanger pipe.

2. The apparatus of claim 1, wherein each heat exchanger pipe (48, 148) is joined to other heat exchanger pipes (48, 148) at two or more locations.

3. The apparatus of either of claim 1 or 2, wherein each heat exchanger pipe (48, 148) is joined to other heat exchanger pipes (48, 148) at three locations.

4. The apparatus of any preceding claim, wherein the joints between neighboring heat exchanger pipes (48, 148) are defined by mutually shared wall portions of the heat exchanger pipes (48, 148).

5. The apparatus of any preceding claim, further comprising a fluid manifold (42, 142), wherein the first and second ends of each heat exchanger pipe (48, 148) are connected in fluid communication with the fluid manifold (42, 142).

6. The apparatus of claim 5, wherein the fluid manifold (42, 142) includes at least one inlet channel and at least one outlet channel, and the first end (52, 152) of each heat exchanger pipe (48, 148) is connected to an inlet channel and the second end of each heat exchanger pipe (48, 148) is connected to an outlet channel.

7. The apparatus of either of any preceding claim, wherein the bridge (56) of each heat exchanger pipe (48, 148) is joined to the leg (50, 150) of a neighboring heat exchanger pipe.

8. The apparatus of claim 6 or 7, wherein the fluid manifold (42) includes two inlet channels (44, 44') and one outlet channel (46), and wherein a first heat exchanger pipe (48) is connected to the first inlet channel (44) and the outlet channel (46) and a second heat exchanger pipe (48') is connected to the outlet channel (46) and the second inlet channel (44').

9. The apparatus of claim 8, wherein in relation to a reference axis (B) parallel to the inlet channels (44, 44'), the two heat exchanger pipes (48, 48') are in approximately the same axial position but are laterally offset from one another, wherein the bridge (56) of the first heat exchanger pipe (48) is contacting a first leg (50') of the second heat exchanger pipe (48').

10. The apparatus of any preceding claim, wherein each straight segment (60) is an axial segment which extends along a reference axis (B) parallel to an inlet channel (44) with which the first end (52) of the leg (50) is coupled in fluid communication.

11. The apparatus of any of claims 1 to 7, wherein the heat exchanger pipes (48, 148) are arranged in two spaced-apart rows, wherein the heat exchanger pipes (48, 148) of the rows are disposed as mirror-images at acute angles to a reference axis.

12. The apparatus of claim 11, wherein the heat exchanger pipes (48, 148) of the first row are interlocked with the heat exchanger pipes (48, 148) of the second row.

## Patentansprüche

1. Wärmetauschervorrichtung (40, 140) für ein Gasturbinentriebwerk, umfassend eine Mehrzahl von Wärmetauscherleitungen (48, 148), wobei jede Leitung (48, 148) zwei identische beabstandete Beine (50, 150) aufweist, die parallel zu einander sind, wobei jedes Bein ein erstes Ende (52, 162) und ein zweites Ende (54) aufweist, und die zweiten Enden (54) mit einer Brücke (56) verbunden sind, die sich quer zwischen den zwei Beinen (50, 150) erstreckt, wobei jedes Bein (50, 150) ein erstes aufrechtes Segment (58) mit einer ersten Biegung an dem ersten Ende (52, 152), ein zweites aufrechtes Segment (58) mit einer zweiten, entgegengesetzten Biegung an dem zweiten Ende (54), und ein gerades Segment (60) dazwischen beinhaltet; wobei die Wärmetauscherleitungen (48, 148) in einem sich wiederholenden Muster angeordnet sind, so dass die Brücke (56) jeder Wärmetauscherleitung (48, 148) an mindestens eine andere Wärmetauscherleitung gefügt ist und diese kontaktiert.

2. Vorrichtung nach Anspruch 1, wobei jede Wärmetauscherleitung (48, 148) an zwei oder mehreren Stellen an andere Wärmetauscherleitungen (48, 148) gefügt ist.

3. Vorrichtung nach Anspruch 1 oder 2, wobei jede Wärmetauscherleitung (48, 148) an drei Stellen an andere Wärmetauscherleitungen (48, 148) gefügt ist.

4. Vorrichtung nach einem der vorstehenden Ansprüche, wobei die Fügungen zwischen benachbarten Wärmetauscherleitungen (48, 148) durch gemeinsam miteinander geteilte Wandbereiche der Wärmetauscherleitungen (48, 148) definiert sind.

5. Vorrichtung nach einem der vorstehenden Ansprüche, weiter umfassend einen Fluidverteiler (42, 142), wobei die ersten und zweiten Enden jeder Wärmetauscherleitung (48, 148) in Fluidkommunikation mit dem Fluidverteiler (42, 142) verbunden sind.

6. Vorrichtung nach Anspruch 5, wobei der Fluidverteiler (42, 142) mindestens einen Einlasskanal und mindestens einen Auslasskanal beinhaltet, und das erste Ende (52, 152) jeder Wärmetauscherleitung (48, 148) mit einem Einlasskanal verbunden ist und das zweite Ende jeder Wärmetauscherleitung (48, 148) mit einem Auslasskanal verbunden ist.

7. Vorrichtung nach irgendeinem der vorstehenden Ansprüche, wobei die Brücke (56) jeder Wärmetauscherleitung (48, 148) an das Bein (50, 150) einer benachbarten Wärmetauscherleitung gefügt ist.

8. Vorrichtung nach Anspruch 6 oder 7, wobei der Fluidverteiler (42) zwei Einlasskanäle (44, 44') und einen Auslasskanal (46) beinhaltet, und wobei eine erste Wärmetauscherleitung (48) mit dem ersten Einlasskanal (44) und dem Auslasskanal (46) verbunden ist, und eine zweite Wärmetauscherleitung (48') mit dem Auslasskanal (46) und dem zweiten Einlasskanal (44') verbunden ist.

9. Vorrichtung nach Anspruch 8, wobei in Bezug auf eine Referenzachse (B) parallel zu den Einlasskanälen (44, 44') die zwei Wärmetauscherleitungen (48, 48') sich in ungefähr derselben axialen Position befinden, jedoch seitlich zu einander versetzt sind, wobei die Brücke (56) der ersten Wärmetauscherleitung (48) ein erstes Bein (50') der zweiten Wärmetauscherleitung (48') kontaktiert.

10. Vorrichtung nach einem der vorstehenden Ansprüche, wobei jedes gerade Segment (60) ein axiales Segment ist, das sich entlang einer Referenzachse (B) parallel einem Einlasskanal (44) erstreckt, mit dem das erste Ende (52) des Beins (50) in Fluidkommunikation gekoppelt ist.

11. Vorrichtung nach einem der Ansprüche 1 bis 7, wobei die Wärmetauscherleitungen (48, 148) in zwei beabstandeten Reihen angeordnet sind, wobei die Wärmetauscherleitungen (48, 148) der Reihen als Spiegelbilder in spitzen Winkeln zu einer Referenzachse angeordnet sind.

12. Vorrichtung nach Anspruch 11, wobei die Wärmetauscherleitungen (48, 148) der ersten Reihe mit den Wärmetauscherleitungen (48, 148) der zweiten Reihe verschränkt sind.

## Revendications

1. Appareil échangeur de chaleur (40, 140) pour un moteur à turbine à gaz, comprenant une pluralité de tubes d'échangeur de chaleur (48, 148), chaque tube (48, 148) ayant deux jambes espacées identiques (50, 150) qui sont parallèles l'une à l'autre, chaque jambe ayant une première extrémité (52, 162) et une deuxième extrémité (54) et les deuxièmes extrémités (54) étant reliées par un pont (56) qui s'étend transversalement entre les deux jambes (50, 150), chaque jambe (50, 150) comprenant un premier segment vertical (58) avec un premier coude à la première extrémité (52, 152), un deuxième segment vertical (58) avec un deuxième coude opposé au niveau de la deuxième extrémité (54), et un segment rectiligne (60) entre eux ; dans lequel les tubes d'échangeur de chaleur (48, 148) sont disposés selon un motif répétitif de sorte que le pont (56) de chaque tube d'échangeur de chaleur (48, 148) soit relié à et en contact avec au moins un autre tube d'échangeur de chaleur.

2. Appareil selon la revendication 1, dans lequel chaque tube d'échangeur de chaleur (48, 148) est relié à d'autres tubes d'échangeur de chaleur (48, 148) à deux emplacements ou plus.

3. Appareil selon la revendication 1 ou 2, dans lequel chaque tube d'échangeur de chaleur (48, 148) est relié à d'autres tubes d'échangeur de chaleur (48, 148) à trois emplacements.

4. Appareil selon l'une quelconque des revendications précédentes, dans lequel les articulations entre des tubes d'échangeur de chaleur (48, 148) voisins sont définies par des portions de paroi mutuellement partagées des tubes d'échangeur de chaleur (48, 148).

5. Appareil selon l'une quelconque des revendications précédentes, comprenant en outre un collecteur de fluide (42, 142), dans lequel les première et deuxième extrémités de chaque tube d'échangeur de chaleur (48, 148) sont reliées en communication fluidique avec le collecteur de fluide (42, 142).

6. Appareil selon la revendication 5, dans lequel le collecteur de fluide (42, 142) comprend au moins un canal d'entrée et au moins un canal de sortie, et la première extrémité (52, 152) de chaque tube d'échangeur de chaleur (48, 148) est reliée à un canal d'entrée et la deuxième extrémité de chaque tube d'échangeur de chaleur (48, 148) est reliée à un canal de sortie.

7. Appareil selon l'une quelconque des revendications précédentes, dans lequel le pont (56) de chaque tube d'échangeur de chaleur (48, 148) est relié à la jambe (50, 150) d'un tube d'échangeur de chaleur voisin.

8. Appareil selon la revendication 6 ou 7, dans lequel le collecteur de fluide (42) comprend deux canaux d'entrée (44, 44') et un canal de sortie (46), et dans lequel un premier tube d'échangeur de chaleur (48) est relié au premier canal d'entrée (44) et au canal de sortie (46) et un deuxième tube d'échangeur de chaleur (48') est relié au canal de sortie (46) et au deuxième canal d'entrée (44').

9. Appareil selon la revendication 8, dans lequel en relation avec un axe de référence (B) parallèle aux canaux d'entrée (44, 44'), les deux tubes d'échangeur de chaleur (48, 48') sont approximativement dans la même position axiale mais sont décalés latéralement l'un par rapport à l'autre, dans lequel le pont (56) du premier tube d'échangeur de chaleur (48) est en contact avec une première jambe (50') du deuxième tube d'échangeur de chaleur (48').

10. Appareil selon l'une quelconque des revendications précédentes, dans lequel chaque segment rectiligne (60) est un segment axial qui s'étend le long d'un axe de référence (B) parallèlement à un canal d'entrée (44) avec lequel la première extrémité (52) de la jambe (50) est couplée en communication fluidique.

11. Appareil selon l'une quelconque des revendications 1 à 7, dans lequel les tubes d'échangeur de chaleur (48, 148) sont agencés en deux rangées espacées, dans lequel les tubes d'échangeur de chaleur (48, 148) des rangées sont disposés en tant qu'images-miroir à des angles aigus par rapport à un axe de référence.

12. Appareil selon la revendication 11, dans lequel les tubes d'échangeur de chaleur (48, 148) de la première rangée sont imbriqués avec les tubes d'échangeur de chaleur (48, 148) de la deuxième rangée.
